# EUROPÄISCHE PATENTSCHRIFT

(11) **EP 1 833 023 B1**
(45) Veröffentlichungstag und Bekanntmachung des Hinweises auf die Patenterteilung: **25.11.2009**
(21) Anmeldenummer: 07006961.2
(22) Anmeldetag: 06.02.2003
(51) Int. Cl.: G06T 11/00, G01S 15/89

(54) **Verfahren und Vorrichtung zur Rekonstruktion und Darstellung von mehrdimensionalen Objekten aus ein- oder zweidimensionalen Bilddaten**
Method and device for reconstructing and representing multi-dimensional objects from one or two-dimensional image data
Procédé et dispositif de reconstruction et de présentation d'objets en plusieurs dimensions à partir de données d'images en une ou deux dimensions

(30) Priorität: 14.03.2002 DE 10211262
(43) Veröffentlichungstag der Anmeldung: 12.09.2007
(62) Teilanmeldung aus: 03743801.7
(73) Patentinhaber: TomTec Imaging Systems GmbH, 85716 Unterschleissheim (DE)
(72) Erfinder: Bayer, Dieter, 85716 Unterschleissheim (DE); Mumm, Bernhard, 82291 Mammendorf (DE); Mayer, Achim, 80637 München (DE); Waldinger, Johannes, 85521 Ottobrunn (DE); Miyamoto, Kiyoji, Tokyo (JP)
(74) Vertreter: Schinkel, Reta

(56) Entgegenhaltungen:
- WO-A-98/20360
- US-A- 4 386 528
- US-A- 5 787 889
- US-A- 5 924 989

## Beschreibung

Die vorliegende Erfindung betrifft ein Verfahren zur Rekonstruktion und Darstellung von mehrdimensionalen Objekten nach dem Oberbegriff des Patentanspruches 1 sowie eine Vorrichtung zur Rekonstruktion und Darstellung von mehrdimensionalen Objekten aus ein- oder zweidimensionalen Bilddaten nach dem Patentanspruch 7 sowie vorteilhafte Verwendungen nach den Patentansprüchen 8 und 9.

Derartige Verfahren und Vorrichtungen zur Rekonstruktion und Darstellung von mehrdimensionalen Objekten aus ein- oder zweidimensionalen Bilddaten sind insbesondere für die Rekonstruktion und Darstellung von dreidimensionalen bzw. vierdimensionalen Volumen aus Ultraschallbildern mit Positionsdaten bekannt, bei denen ein Ultraschallsender Ultraschallwellen auf ein Objekt abstrahlt, während ein Ultraschallempfänger die von dem Objekt reflektierten Ultraschallwellen empfängt. Zur Aufnahme des Objekts wird der Ultraschallsender bzw. der Ultraschallempfänger entlang dem Objekt verfahren oder relativ zum Objekt rotiert, während einzelne Bild-Teilbereiche des Objekts aufgenommen werden. Diese Bild-Teilbereiche entsprechen im Normalfall einem zeilenweisen Scanvorgang (ein- bzw. zweidimensionale Aufnahmen), der das Objekt zeilenweise längs einer Aufnahmerichtung, in die der Ultraschallsender bzw. der Ultraschallempfänger verfahren wird, aufnimmt. Die im Ultraschallgerät erzeugten Bilder lassen sich bei den bekannten Ultraschallgeräten digital oder über einen Videoausgang in ein Nachverarbeitungsgerät bzw. in ein Datenverarbeitungssystem übernehmen. Dort können die Bilder gespeichert oder auch direkt nachverarbeitet werden. Bei den genannten Bildern handelt es sich um ein- oder zweidimensionale Bilder, die meist zusammen mit ihrer entsprechenden Position als ein- oder zweidimensionale Bilddaten zur Verfügung stehen.

Durch den Scanvorgang wird das zu untersuchende Objekt zeilenweise aufgenommen, d.h. es werden einzelne im wesentlichen zueinander parallele Linien und "Schichten" bzw. zueinander rotationssymmetrische "Scheiben" des Objekts mit Ultraschallwellen beaufschlagt und die entsprechenden reflektierten Ultraschallwellen in dem Ultraschallgerät empfangen. Die empfangenen Ultraschallwellen erzeugen Bildinformationen, die Informationen über die einzelnen Schichten bzw. Scheiben des Objekts, d.h. darüber, an welchen Stellen das Objekt beispielsweise geringer oder stärker verdichtete Materialbereiche (beispielsweise Hohlräume oder Grenzflächen zwischen Gewebe und Flüssigkeit) aufweist, liefern.

Die einzelnen Schichten bzw. Scheiben des Objekts werden in einem Datenverarbeitungssystem "übereinandergeschichtet" bzw. "aneinandergereiht", um dann am Anzeigegerät eine bsp. dreidimensionale Darstellung des Objekts zu erhalten. Die unterschiedlichen Abstände verschiedener Bereiche einer Schicht, d.h. die Lage von Hohlräumen oder stärker verdichteten Materialbereichen des Objekts relativ zu dem Ultraschallgerät, erhält man durch die Auswertung der Grauwertinformationen einer jeden Schicht.

Die bekannten Verfahren wie beispielsweise Ultraschallverfahren benützen eine vordefinierte oder eine zu errechnende Grauwertstufe (threshold), um im Bild Konturen zu finden. Die Kontureninformationen werden dann in einem Bild gespeichert und ergeben nach Auswertung der Entfernungen zwischen dem Ultraschallgerät bzw. dem Ultraschallkopf und den Außenkonturen des zu untersuchenden Objekts einen mehrdimensionalen Bildeindruck. Der gesamte Scanvorgang erstreckt sich über einen bestimmten Bereich, beispielsweise des menschlichen Körpers, wobei sukzessiv während des Scanvorganges einzelne Schichten bzw. Scheiben des zu untersuchenden Objekts linienweise innerhalb des Körpers aufgenommen werden. Die einzelnen Ultraschallbilder werden in einem nachfolgenden Verarbeitungsschritt wieder räumlich richtig aneinander zusammengefügt, so daß sich durch "Aufschichten" der einzelnen Bilder ein vollständiges drei- oder mehrdimensionales Bild des Objekts ergibt.

Diese räumlichen tomographischen Aufnahmeverfahren von menschlichen Organen sind beispielsweise aus der US 5 105 819 oder der US 5 159 931 bekannt. Hier wird bei der transösophagealen Echokardiographie dem Patienten durch die Speiseröhre eine schwenkbare endoskopische Sonde eingeführt. Der Ultraschallsensor ist als sogenanntes "phased array" in der Spitze der Sonde integriert. Dabei wird der Ultraschallkopf an der Spitze der Sonde entweder linear verschoben oder rotiert, so daß von jeder Winkeleinstellung des rotierenden Ultraschallkopfes bzw. von jeder verschobenen Position der Sonde eine Schicht des Organs abgetastet wird. Pro Schicht wird eine Bildsequenz, d.h. beispielsweise ein oder mehrere Bewegungszyklen des Organs, wie beispielsweise ein Herzzyklus, aufgenommen. Nach der Aufnahme einer solchen Sequenz wird der Ultraschallkopf bei der Rotation um ein gewünschtes Winkelinkrement mittels eines Motors, wie beispielsweise eines Schritt- oder Linearmotors, weitergedreht oder per Hand verschoben bzw. bei der linearen Verschiebung linear verschoben. Ein Datenverarbeitungssystem löst dann die nächste Aufnahmesequenz aus, wobei das Datenverarbeitungssystem sowohl die Daten des Elektrokardiogramms (EKG) als auch die Atmungs- oder Thoraxbewegung (Respirationsaufnahme) verarbeiten kann.

Auch ist es bekannt, die Position des Ultraschallkopfes in jeder beliebigen Lage im Raum mittels eines Positionssensors während der Aufnahme zu bestimmen. Dieser Positionssensor befindet sich am Ultraschallkopf und ist beispielsweise über ein elektromagnetisches Feld mit dem Datenverarbeitungssystem derart verbunden, daß dieses sämtliche translatorischen und rotatorischen Freiheitsgrade erfasst und so die Position, Bewegungsrichtung und Geschwindigkeit des Kopfes stets erfaßt werden kann. So können die aufgenommenen ein- oder zweidimensionalen Bilder später räumlich zugeordnet und das aufgenommene dreidimensionale bzw. mehrdimensionale Volumen rekonstruiert werden.

Die ein- oder zweidimensionalen Bilder (beispielsweise Grauwertbilder bei Ultraschallaufnahmen) und deren entsprechende absolute Position im Raum und/oder entsprechende relative Position der einzelnen Bilder zueinander ergeben zusammen mit den Bildern selbst die ein- oder zweidimensionalen Bilddaten, anhand derer mehrdimensionale Objekte mehrdimensional rekonstruiert werden können. Insbesondere in der klinischen Praxis hat es sich bei der Aufnahme von Ultraschallbildern bewährt, die Aufnahmesequenz mit dem EKG zu koppeln, so daß jedes Bild einer Sequenz immer zu einem bestimmten Phasenpunkt während des Herzschlagzyklus aufgenommen wird. Dadurch lassen sich bei bewegten Objekten bzw. Organen innerhalb von Lebewesen Sequenzen von dreidimensionalen Bildern erzeugen, die aneinandergereiht eine zeitabhängige dreidimensionale Darstellung des Organs ergeben. Die Organbewegung läßt sich dann wie in einem "Film" zyklisch, d.h. vierdimensional, betrachten.

Herkömmliche Verfahren zur Rekonstruktion mehrdimensionaler Objekte aus ein- oder zweidimensionalen Bilddaten verwenden in aller Regel die ein- oder zweidimensionalen Bild-Teilbereiche, schichten diese korrespondierend zu den entsprechenden Positionen hintereinander auf und interpolieren die "fehlenden Daten" zwischen den einzelnen ein- oder zweidimensionalen Bild-Teilbereichen mittels herkömmlicher, in aller Regel analoger aber auch digitaler Interpolationsmethoden. Dabei werden beispielsweise Konturen im Grauwertbild einer ein- oder zweidimensionalen Ultraschallaufnahme mit den Konturen eines benachbarten Grauwertbildes verglichen und diese anhand eines dreidimensionalen flächigen Polygonzuges bsp. dritten oder fünften Grades miteinander verbunden, um so die fehlenden Daten zwischen den ein- oder zweidimensionalen Bild-Teilbereichen "aufzufüllen".

Diese herkömmlichen Verfahren sind zeit- und rechenintensiv und eignen sich meist nicht für Echtzeit-Verfahren, d.h. solche Verfahren, wo beispielsweise der Arzt während einer Operation den Operationsfortschritt in Echtzeit mittels einer Ultraschallaufnahme verfolgen möchte.

Die US 5,924,989 offenbart ein Verfahren zur Rekonstruktion eines mehrdimensionalen Objekts aus zweidimensionalen Bilddaten. Zum Auffüllen vorhandener Lücken zwischen in einen Voxelraum eingepassten zweidimensionalen Bildern wird eine Interpolation eines unbekannten Voxelwerts aus bekannten Werten von nächstliegenden, innerhalb einer maximal zulässigen Entfernung des betreffenden Voxels befindlichen, Voxeln durchgeführt.

Die US 5,787,889 offenbart ein Verfahren zur Rekonstruktion eines mehrdimensionalen Objekts aus zweidimensionalen Bilddaten. Beim Einpassen der zweidimensionalen Bilder in den Voxelraum wird die Intensität jedes bekannten Pixels ausgehend von dessen tatsächlicher Lage im Raum gleichmäßig in eine würfelförmige Umgebung verteilt. Dadurch werden auch die Lücken im voxelraum aufgefüllt. Entfallen auf ein voxel Beiträge mehrerer bekannter Pixel, erfolgt eine gewichtete Summation.

Der vorliegenden Erfindung liegt die Aufgabe zugrunde, herkömmliche Verfahren und Vorrichtungen zur Rekonstruktion und Darstellung von mehrdimensionalen Objekten aus ein- oder zweidimensionalen Bilddaten dahingehend zu verbessern, daß diese schnell und einfach durchführbar sind, weniger Rechenzeit und Verarbeitungsschritte benötigen und so kostengünstiger und in Echtzeit anwendbar sind.

Die Erfindung löst die ihr zugrundeliegende Aufgabe durch die kennzeichnenden Merkmale der unabhängigen Patentansprüche 1 und 7. Vorteilhafte Ausgestaltungen der Erfindung sind in den Unteransprüchen gekennzeichnet und dort beschrieben. Vorteilhafte Verwendungen des erfindungsgemäßen Verfahrens bzw. der erfindungsgemäßen Vorrichtung sind in den Ansprüchen 8 und 9 gekennzeichnet.

Gemäß der vorliegenden Erfindung nutzt das Verfahren zur Rekonstruktion von mehrdimensionalen Objekten aus ein- oder zweidimensionalen Bilddaten einen mehrdimensionalen Voxelraum, der aus vorbestimmbar kleinen Raumelementen besteht, die mittels der zur Verfügung stehenden ein- oder zweidimensionalen Bilddaten, die mittels der Bild-Teilbereiche und der entsprechenden bsp. räumlichen oder zeitlichen Positionen der einzelnen Bild-Teilbereiche generiert wurden, definiert werden. Diese Definition der einzelnen Raumelemente des mehrdimensionalen Voxelraums erfolgt über die Erzeugung einer ersten Raumelementgruppe aus ersten mehrdimensionale Bild-informationen enthaltenden Raumelementen, die Ebenen oder Linien von Bild-Teilbereichen berühren oder schneiden, die in dem mehrdimensionalen Voxelraum eingeordnet wurden.

In einem zweiten Schritt wird eine zweite Raumelementgruppe aus zweiten Raumelementen in dem mehrdimensionalen Voxelraum mittels einer Informationstransformation aus den mehrdimensionalen Bildinformationen der ersten Raumelementgruppe erzeugt. Diese zweite Raumelementgruppe besteht somit aus zweiten Raumelementen in dem mehrdimensionalen Voxelraum, die die Ebenen oder Linien von Bild-Teilbereichen aus den ein- oder zweidimensionalen Bilddaten in aller Regel weder berühren noch schneiden.

Das erfindungsgemäße Informationstransformationsverfahren umfasst des Weiteren : Von jedem ersten Raumelement abgehend definiert ein längs eines vorbestimmbaren mehrdimensionalen Richtungsvektors liegender Suchstrahl diejenigen zweiten Raumelemente, die mittels der mehrdimensionalen Bildinformationen desjenigen ersten Raumelements bestimmt werden, das den Startpunkt des Suchstrahls bildet. Der Suchstrahl hat mit Vorteil längs des vorbestimmbaren mehrdimensionalen Richtungsvektors eine maximale räumliche und/oder zeitliche Länge (11).

Beispielsweise wird ein von jedem ersten Raumelement in einem bestimmten Winkel von der Ebene des Bild-Teilbereichs, der für die Bestimmung der mehrdimensionalen Bildinformation des ersten Raumelements genutzt wurde, abgehender Suchstrahl derart definiert, daß dieser solche zweiten Raumelemente der zweiten Raumelementgruppe definiert, die mittels der mehrdimensionalen Bildinformationen des ersten Raumelements bestimmt werden, das den Startpunkt des Suchstrahls bildete. Der Suchstrahl hat dabei eine vorgegebene bzw. vorbestimmbare maximale Länge und steht insbesondere orthogonal auf der Ebene des Bild-Teilbereichs, der den Startpunkt definierte.

Das Informationstransformationsverfahren definiert die zweite Raumelementgruppe somit ausgehend von den ersten Raumelementen der ersten Raumelementgruppe, die die Startpunkte für den jeweiligen Suchstrahl bilden. Die Ebenen der Bild-Teilbereiche, die die erste Raumelementgruppe definierten, "strahlen" somit in den Raum und definieren so die zweite Raumelementgruppe.

Mit Vorteil werden die zweiten Raumelemente auch mittels der mehrdimensionalen Bildinformation eines weiteren ersten Raumelements der ersten Raumelementgruppe bestimmt, das einen Zielpunkt bildet, den der Suchstrahl trifft, der von dem Startpunkt eines ersten Raumelements stammt. Dies ist insbesondere dann der Fall, wenn der Suchstrahl noch innerhalb einer vorggebbaren maximalen Länge (bsp. zeitlich oder räumlich) auf ein weiteres erstes Raumelement trifft, das bereits innerhalb der ersten Raumelementgruppe mit mehrdimensionalen Bildinformationen definiert wurde.

Außerdem werden die zweiten Raumelemente zunächst in einem ersten Schritt mittels der mehrdimensionalen Bildinformationen desjenigen ersten Raumelements bestimmt, das den Startpunkt des Suchstrahls bildet. In weiteren Schritten werden die zweiten Raumelemente dann mittels mehrdimensionaler Bildinformationen weiterer erster Raumelemente gewichtet, die Startpunkte von Suchstrahlen bilden, die die zweiten Raumelemente ebenfalls durchdringen, wobei sich die Gewichte an den mehrdimensionalen Entfernungen jedes zweiten Raumelements zu den entsprechenden Startpunkten orientieren. Dies ist z.B bei rotationssymmetrischen Aufnahmen der Fall, da bsp. zweidimensionale Bild-Teilbereiche nicht parallel zueinander stehen und sich orthogonale Suchstrahlen daher schneiden.

Die zweiten Raumelemente können mit Vorteil auch mittels der gewichteten mehrdimensionalen Bildinformationen des Startpunktes und des Zielpunktes bestimmt werden, wobei sich die Gewichte an den Entfernungen jedes auf dem Suchstrahl liegenden zweiten Raumelements zu dem Start- bzw. Zielpunkt orientieren. Hat der Startpunkt beispielsweise die mehrdimensionale Bildinformation "drei." und der Zielpunkt die mehrdimensionale Bildinformation "fünf", so erhalten die zweiten Raumelemente auf dem Suchstrahl zwischen dem Startpunkt und dem Zielpunkt ausgehend vom Startpunkt die mehrdimensionale Bildinformation "drei" hin zu "vier" in der Mitte zwischen Start- und Zielpunkt und hin zu "fünf" kurz vor dem Zielpunkt am weiteren ersten Raumelement.

Mit Vorteil wird die erste Raumelementgruppe wie folgt definiert: Die mehrdimensionale Bildinformation jedes ersten Raumelements der ersten Raumelementgruppe wird mittels derjenigen ein- oder zweidimensionalen Bildinformation bestimmt, die an der jeweiligen Schnitt- bzw. Berührungsstelle des entsprechenden ersten Raumelements mit der entsprechenden Linie oder Ebene eines Bild-Teilbereichs existiert. Sobald also die Bild-Teilbereiche positionsgenau in dem mehrdimensionalen Voxelraum eingeordnet werden, berühren oder schneiden diese einige der den Voxelraum aufspannenden Raumelemente. Die Raumelemente, die eine Schnitt- oder Berührungsstelle mit einem ein- oder zweidimensionalen Bild-Teilbereich aufweisen, werden dann als erste Raumelemente einer ersten Raumelementgruppe zugeteilt.

Als eine mögliche Informationstransformation zur Definition der zweiten Raumelementgruppe hat sich folgendes Verfahren als vorteilhaft herausgestellt: Für jedes zweite Raumelement, das noch über keine mehrdimensionale Bildinformation verfügt, wird die mehrdimensionale, insbesondere räumliche und/oder zeitliche Entfernung zum nächsten ersten Raumelement der ersten Raumelementgruppe bestimmt. Diese Information wird eventuell abgespeichert. Als "Entfernung" wird nachfolgend stets die mehrdimensionale Entfernung im mehrdimensionalen Voxelraum verstanden. Dies ist beispielsweise ein dreidimensionaler Abstand oder ein zeitlicher Abstand (Zeitspanne) zwischen Ebenen von ersten Raumelementen, die zu unterschiedlichen Zeiten aufgenommen wurden oder ein zeitlicher Abstand zwischen einzelnen Voxelräumen.

Die zweite Raumelementgruppe enthält somit für jedes zweite Raumelement die Information der (mehrdimensionalen) Entfernung jedes zweiten Raumelements zum nächsten ersten Raumelement sowie die Informationen zur Identifizierung des entsprechenden ersten Raumelements. Die mehrdimensionale Bildinformation jedes zweiten Raumelements wird dann mittels der mehrdimensionalen Bildinformation des "nächsten" ersten Raumelements bestimmt.

Mit Vorteil wird die mehrdimensionale Bildinformation jedes zweiten Raumelements jedoch dann nicht bestimmt, wenn die Entfernung zum nächsten ersten Raumelement größer ist als eine vorbestimmbare maximale räumliche und/oder zeitliche Entfernung (xₘₐₓ bzw. tₘₐₓ). Damit wird verhindert, daß ungewollt Informationen der ersten Raumelementen "zu weit" in den Raum hinein propagieren oder zu große Zeiträume damit überbrückt werden.

Beispielsweise kann als mehrdimensionale Bildinformation jedes zweiten Raumelements, das innerhalb der maximalen räumlichen oder zeitlichen Entfernung zu einem ersten Raumelement liegt, die mehrdimensionale Bildinformation des nächsten ersten Raumelements verwendet werden. Das Verfahren untersucht somit für jedes noch nicht definierte, d.h. informationslose zweite Raumelement im Voxelraum, dessen Entfernung zum nächsten ersten Raumelement und übernimmt die mehrdimensionale Bildinformation dieses ersten Raumelements in identischer Weise. Die zweite Raumelementgruppe besteht mit Vorteil aus zweiten Raumelementen, die als "mehrdimensionale Bildinformation" auch die Entfernung zur und eine Bezugszahl für die Ebene oder Linie und Position des Bild-Teilbereichs abgespeichert haben, die für die Bestimmung der mehrdimensionalen Bildinformation des nähesten ersten Raumelements genutzt wurde. Somit besteht für jedes zweite Raumelement eine Art "Berechnungsformel" bzw. eine Bezugszahl, bestehend bsp. aus einem Entfernungsvektor und einem ersten "Bezugs"- Raumelement, die auf ein oder mehrere spezielle Pixel eines Bild-Teilbereichs hinweist, die durch das beispielsweise Ultraschallaufnahmesystem aufgenommen wurden.

Als weiteres vorteilhaftes Informationstransformationsverfahren zur Generierung der zweiten Raumelementgruppe wird folgendes angewendet: Von jedem zweiten Raumelement der zweiten Raumelementgruppe werden die Entfernungen zu zwei oder mehreren ersten Raumelementen der ersten Raumelementgruppe bestimmt und die mehrdimensionale Bildinformation jedes zweiten Raumelements wird mittels der mehrdimensionalen Bildinformationen einer vorbestimmbaren Anzahl von räumlich und/oder zeitlich "nächsten" ersten Raumelementen definiert. Die mehrdimensionale Bildinformation jedes zweiten Raumelements wird beispielsweise mittels der anhand der verschiedenen Entfernungen zu ersten Raumelementen gewichteten mehrdimensionalen Bildinformationen einer vorbestimmbaren Anzahl von ersten Raumelementen definiert.

Mit Vorteil wird das Objekt mittels des aus der ersten und zweiten Raumelementgruppe bestehenden mehrdimensionalen Voxelraums rekonstruiert und mehrdimensional dargestellt, wobei beispielsweise Teile eines rekonstruierten dreidimensionalen Objekts mittels variabler Schnittebenen dargestellt werden können. Sobald der mehrdimensionale Voxelraum innerhalb der vorgegebenen Grenzen des erfindungsgemäßen Verfahrens "aufgefüllt" wurde, lassen sich durch diesen beliebige Schnittebenen oder -linien legen, um so Teile des Objekts "herauszuschälen" oder mittels einer Schnittdarstellung darzustellen. Mit Vorteil läßt sich das rekonstruierte Objekt oder Teile davon auch mit vorbestimmbaren Charakteristika wie Farbe oder Widerstand darstellen bzw. ausstatten. Mit Vorteil werden bsp. dichtere Gewebestrukturen im menschlichen Körper mit einem höheren "Widerstand" ausgestattet, so dass bei einer Darstellung am PC-Bildschirm eine grössere Rückstellkraft an einem aktiven Zeigegerät (Force-Feedback-Gerät) dann angelegt wird, wenn der Nutzer auf solche dichteren Gewebebereiche "zeigt".

Bestimmte Teile des rekonstruierten Objekts, beispielsweise bestimmte Konturen können mittels des dreidimensionalen Voxelraums auf einer Seite der beliebigen Schnittebene zur Sichtbarmachung markiert werden, während andere Elemente des dreidimensionalen Voxelraums auf der entsprechenden Seite der Schnittebene verborgen werden, so daß sich eine dreidimensionale insbesondere farbige Darstellung von Teilen eines bsp. dreidimensionalen Objekts ergibt. Mit Vorteil wird der dreidimensionale Voxelraum dabei zur Sichtbarmachung bestimmter Teile des rekonstruierten Objekts auf jeder Seite der Schnittebene längs der Schnittebene in zwei Hälften zerlegt und kongruent zueinander oder spiegelbildlich dargestellt, so daß das gesamte Objekt dreidimensional sichtbar wird.

Die erfindungsgemäße Vorrichtung zur Rekonstruktion von mehrdimensionalen Objekten aus ein- oder zweidimensionalen Bilddaten nutzt Aufnahmen ein- oder zweidimensionaler Bild-Teilbereiche des Objekts, wobei erste Speichermittel die absoluten räumlichen und/oder zeitlichen Positionen der einzelnen Bild-Teilbereiche im Raum und/oder die relativen räumlichen und/oder zeitlichen Positionen der einzelnen Bild-Teilbereiche zueinander zusammen mit den ein- oder zweidimensionalen Bildinformationen der einzelnen Bild-Teilbereiche zur Generierung mehr dimensionaler Bilddaten speichern, wobei zweite Speichermittel eine erste Raumelementgruppe speichern, die aus ersten Bildinformationen enthaltenden Raumelementen, die Linien oder Ebenen von Bild-Teilbereichen berühren oder schneiden, in einem mehrdimensionalen Voxelraum mittels der ein- oder zweidimensionalen Bilddaten, erzeugt wurde und wobei dritte Speichermittel eine zweite Raumelementgruppe speichern, die aus zweiten Raumelementen in dem mehrdimensionalen Voxelraum aus den Bildinformationen der ersten Raumelementgruppe erzeugt wurde, wobei die Vorrichtung zur Durchführung eines Verfahrens nach einem der Ansprüche 1-6 konfiguriert ist.

Sämtliche Speichermittel sind mit Vorteil an einen Prozessor angeschlossen, der die vorbeschriebene Informationstransformation anhand eines der bevorzugten Verfahren durchführt. Das Objekt wird nach der Definition der ersten Raumelementgruppe und der zweiten Raumelementgruppe, d.h. nach der möglichst vollständigen Definition aller Raumelemente des mehrdimensionalen Voxelraums mittels einer Anzeige rekonstruiert dargestellt, wobei Rechenmittel die Informationstransformationen aus den Daten des ersten und zweiten Speichermittels durchführen und die Ergebnisse im dritten Speichermittel abspeichern.

Eine vorteilhafte Verwendung eines Verfahrens bzw. einer Vorrichtung nach der vorliegenden Erfindung liegt in der mehrdimensionalen Rekonstruktion und Darstellung eines Organs, das mittels eines Ultraschallaufnahmeverfahrens aufgenommen wurde, insbesondere zur Darstellung des Herzens eines Lebewesens, unter Berücksichtigung der Bewegung des Herzens. Weitere vorteilhafte Verwendungen der erfindungsgemäßen Vorrichtung bzw. des erfindungsgemäßen Verfahrens liegen in der Verwendung bei der transtorakalen (TTE), intravaskulären (IVUS) oder intraductalen (IDUS) Sonographie, bzw. der Echokardiographie.

Einige vorteilhafte Ausgestaltungen der Erfindung werden anhand der nachfolgenden Zeichnungen näher erläutert. Dabei zeigen:
- Figur 1: eine schematische Darstellung der Aufnahme eines Herzens,
- Figur 2: einen rotationssymmetrischen Ultraschallwandler zur Aufnahme eines Herzens,
- Figur 3: die schematische Darstellung eines dreidimensionalen Voxelraums;
- Figur 3a: einen ersten Ausschnitt aus dem mehrdimensionalen Voxelraum;
- Figur 3b: einen zweiten Ausschnitt aus dem dreidimensionalen Voxelraum;
- Figur 4: die schematische Darstellung einer ersten bevorzugten Ausführungsform des erfindungsgemäßen Verfahrens;
- Figur 5: eine schematische Darstellung einer zweiten bevorzugten Ausführungsform des erfindungsgemäßen Verfahrens;
- Figur 6: die mehrdimensionale Darstellung eines rekonstruierten Objekts;
- Figur 7: die mehrdimensionale Darstellung eines rekonstruierten Objekts mit Schnittebene;
- Figur 8: die mehrdimensionale Darstellung eines rekonstruierten Objekts mit getrennter und geschwenkter Darstellung beider Seiten der Schnittebene.

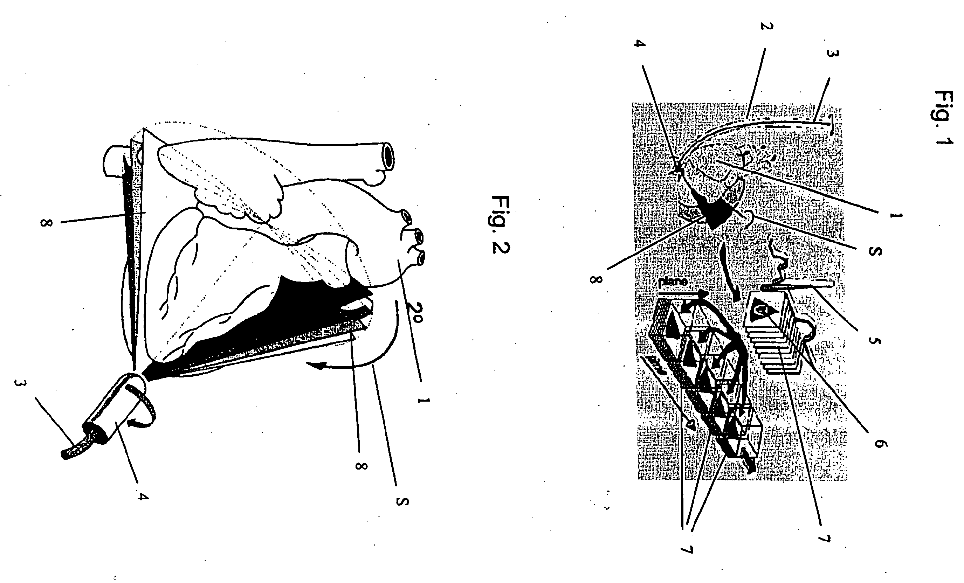

Figur 1 zeigt die schematische Ansicht zur Aufnahme eines Objekts 1, beispielsweise eines Herzens, welches transösophageal aufgenommen wird. Dabei wird ein Ultraschallkopf 4 durch die Speiseröhre 2 mittels eines flexiblen Schlauchs 3 eingeführt, um in zueinander parallelen oder rotationssymmetrischen Positionen Aufnahmen 7 des Objekts 1 zu erhalten. Dabei rotiert zum Beispiel eine aus Ultraschallstrahlen gebildete tomographische Ultraschallebene bzw. -schnitt 8 in der Rotationsrichtung S. Die einzelnen Bild-Teilbereiche 6, die untereinander einen bestimmten Abstand aufweisen, werden anhand eines EKG-Signals getriggert und entsprechend einander zugeordnet. Diese ergeben übereinander geschichtet jeweils eine Aufnahme 7 zu einem bestimmten Bewegungszustand des Objekts 1. Die einzelnen Aufnahmen 7 können dann sukzessive an einem Bildschirm eines Datenverarbeitungssystems dargestellt werden, wodurch sich eine vierdimensionale, d.h. bewegte mehrdimensionale Darstellung des Objekts 1 ergibt.

Figur 2 zeigt einen rotationssymmetrischen Ultraschallkopf 4, der an den flexiblen Schlauch 3 angeschlossen ist. Der Ultraschallkopf 4 "sendet" rotationssymmetrische aus UltraschallStrahlen gebildete tomographische Ultraschallebenen-/ bzw.- schnitte 8 aus, die in einer Rotationsrichtung S rotieren, um das Objekt 1 aufzunehmen. Die einzelnen Schichtebenen der rotationssymmetrischen Aufnahmen 7 weisen dabei einen konstanten oder variablen Abstand auf.

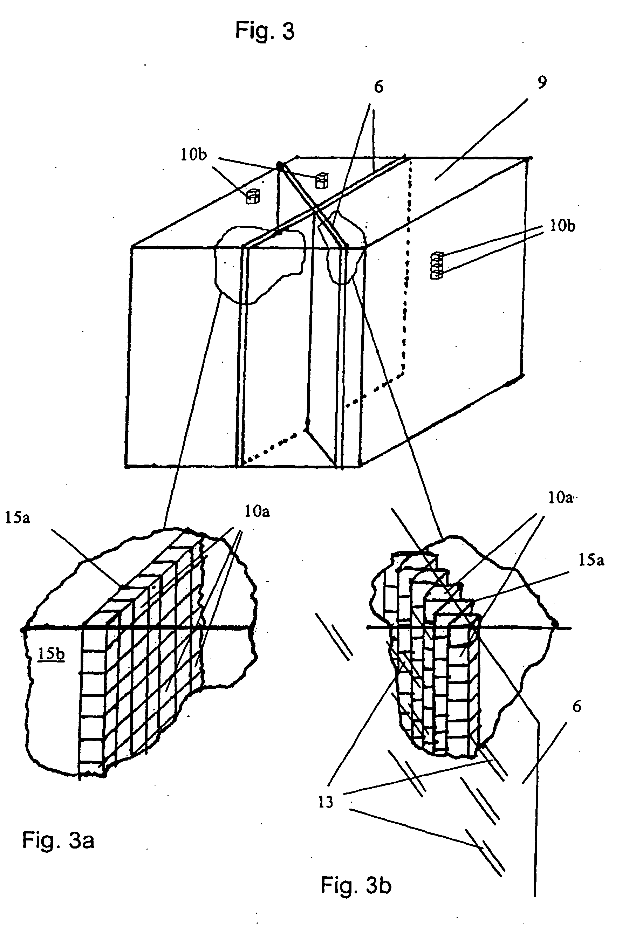

Figur 3 zeigt schematisch den mehrdimensionalen Voxelraum 9, hier dreidimensional dargestellt, in den, beispielhaft dargestellt, zwei zweidimensionale Bild-Teilbereiche 6 eingeordnet wurden. Bei diesen Bild-Teilbereichen 6 handelt es sich beispielsweise um rotationssymmetrische Aufnahmen 7, die, wie in Figur 2 dargestellt, beispielsweise von einem Ultraschallkopf zur Aufnahme eines Herzens aufgenommen wurden. Diese hier zweidimensionalen Bild-Teilbereiche 6 werden in dem Voxelraum 9 anhand der ebenfalls bekannten Positionen der Bild-Teilbereiche 6 eingeordnet.

Anhand der Figuren 3a und 3b werden Ausschnitte aus dem mehrdimensionalen Voxelraum 9 gezeigt, der erste Raumelemente 10a und zweite Raumelemente 10b aufweist. Die ersten Raumelemente 10a bilden eine erste Raumelementgruppe 15a und grenzen sich dadurch von der zweiten Raumelementgruppe 15b ab, die aus zweiten Raumelementen 10b besteht, indem sie Ebenen der Bild-Teilbereiche 6 schneiden oder berühren, die in den mehrdimensionalen Voxelraum 9 eingeordnet wurden. Wie in Figur 3b dargestellt, schneidet bzw. berührt eine Ebene des Bild-Teilbereichs 6 Raumelemente des dreidimensionalen Voxelraums 9 und definiert dadurch die ersten Raumelemente 10a einer ersten Raumelementgruppe 15a. Die einzelnen Raumelemente 10a erhalten dabei die Bildinformation 13, die der zweidimensionale Bild-Teilbereich 6 liefert. Dies können Farb- oder Grauwertinformationen, Digital- oder Analoginformationen, Zahlenwerte, Zeitwerte oder heuristische Werte sein, die jeweils in ein erstes Raumelement 10a übernommen werden oder die die Rauminformation, d.h. die mehrdimensionale Bildinformation eines ersten Raumelements 10a definieren.

Bei den ersten und zweiten Raumelementen 10a, 10b handelt es sich um "Einheitswürfel" des mehrdimensionalen Voxelraums 9, d.h. um Voxel, die den mehrdimensionalen Raum aufspannen. Nachdem sämtliche ein- oder zweidimensionale Bild-Teilbereiche 6 im mehrdimensionalen Voxelraum 9 "aufgespannt" wurden, d.h. dort eingeschichtet bzw. eingegliedert wurden, erfolgt die Definition der ersten Raumelementgruppe 15a mittels der Bildinformationen 13 der Bild-Teilbereiche 6.

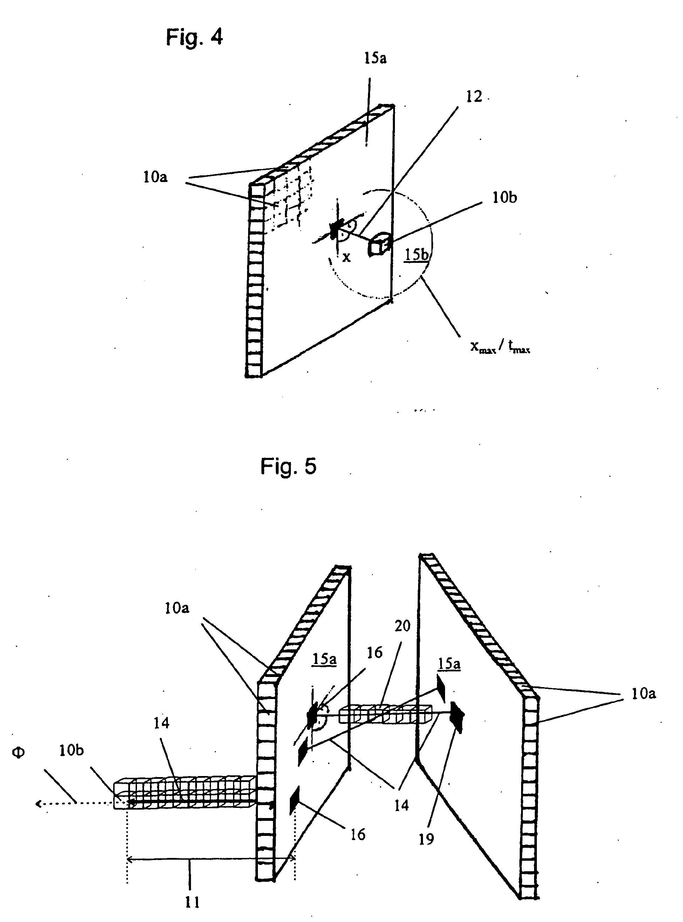

Nachdem die erste Raumelementgruppe 15a definiert wurde, erfolgt die Informationstransformation zur Definition einer zweiten Raumelementgruppe 15b, die aus zweiten Raumelementen 10b besteht. Eine Ausführungsform zeigt Figur 4. Hier wird für jedes zweite Raumelement 10b die bsp. räumliche Entfernung zum nächstliegenden ersten, d.h. bereits definierten, Raumelement 10a festgestellt wird. Dies kann beispielsweise, wie in Figur 4 dargestellt, ein Lot 12 sein, das ein erstes Raumelement 10a trifft. Jedoch sind auch beliebige Winkel vorstellbar, solange innerhalb einer max. Entfernung xₘₐₓ bzw. tₘₐₓ ein erstes Raumelement 10a erreicht wird.

Somit wird um jedes zweite Raumelement 10b ein "Suchradius" bzw. eine "mehrdimensionale Suchkugel" mit max. Entfernung xₘₐₓ gelegt und festgestellt, ob innerhalb dieser "Suchkugel" ein erstes Raumelement 10a liegt, um dann dessen Entfernung x zum zweiten Raumelement 10b einschließlich der entsprechenden Bildinformation des ersten Raumelements 10a im zweiten Raumelement 10b abzuspeichern.

Figur 5 zeigt eine vorteilhafte Ausführungsform der vorliegenden Erfindung, wobei ausgehend von jedem ersten Raumelement 10a ein Suchstrahl 14 längs eines vorbestimmbaren mehrdimensionalen Richtungsvektors Φ ausgesandt wird, wobei dieser Suchstrahl 14 dann die zweiten Raumelemente 10b definiert, die er trifft. Dabei hat der Suchstrahl 14 mit Vorteil eine max. Länge 11, so daß sämtliche zweite Raumelemente 10b, die bis zur max. Länge 11 auf dem Suchstrahl 14 liegen, mittels der mehrdimensionalen Bildinformation definiert werden, die der Startpunkt 16, d.h. jenes erste Raumelement 10a hat, das den Ausgangspunkt des Suchstrahls 14 bildet. Wie in Figur 5 dargestellt, kann der Suchstrahl 14 dabei bis zu einer max. Länge 11 "suchen", falls kein weiteres erstes Raumelement 10a getroffen wird, oder er trifft auf ein weiteres erstes Raumelement 10a, das dann den Zielpunkt 19 bildet.

Die jeweiligen zweiten Raumelemente 10b auf dem Suchstrahl 14 zwischen Startpunkt 16 und Zielpunkt 19 können dann entweder die mehrdimensionale Bildinformation des Startpunkts 16 oder die mehrdimensionale Bildinformation des Zielpunkts 19 identisch übernehmen oder eine gewichtete mehrdimensionale Bildinformation übernehmen, die sich aus den Gewichten der jeweiligen Entfernung des jeweiligen zweiten Raumelements 10b zum Startpunkt 16 bzw. Zielpunkt 19 ergibt.

Falls ein zweites Raumelement 10b von einem weiteren Suchstrahl 14 getroffen wird und somit ein Kreuzelement 20 darstellt, kann es mit Vorteil auch in einem ersten Schritt mittels der mehrdimensionalen Bildinformationen desjenigen ersten Raumelements 10a bestimmt werden, das den Startpunkt 16 des ersten Suchstrahls 14 bildet und in weiteren Schritten mittels mehrdimensionaler Bildinformationen weiterer erster Raumelemente 10a gewichtet werden, die Startpunkte 16 von Suchstrahlen 14 bilden, die die Kreuzelemente 20 ebenfalls durchdringen, wobei sich die Gewichte an den mehrdimensionalen Entfernungen jedes zweiten Raumelements 10b (hier: Kreuzelement 20) zu den entsprechenden Startpunkten 16, 19 orientieren.

Das in Figur 4 dargestellte Verfahren ist in einem anderen Zusammenhang auch als Distanztransformationsverfahren bekannt (Distance Transformations in Digital Images, Gunilla Borgefors, Computer Vision, Graphics and Image Processing 34, 344 bis 371 (1986)) und definiert ein Verfahren, das besonders gut für solche Volumina geeignet ist, die relativ dicht abgetastet wurden, d.h. die eine Fülle von ein- oder zweidimensionalen Bild-Teilbereichen 6 innerhalb eines gewissen Volumens enthalten. Durch die Beschränkung auf eine max. Entfernung xₘₐₓ wird verhindert, daß sich die aufgenommenen Bilder, d.h. zweidimensionale Bild-Teilbereiche 6, zu stark im Volumen "ausbreiten" und damit eine unrealistische Rekonstruktion entsteht. Dabei wird mit Vorteil nicht die exakte euklidische Distanz verwendet, sondern die Distanz aus den bereits einsortierten "Voxelebenen", d.h. solche Bild-Teilbereiche 6, die bereits im dreidimensionalen Voxelraum 9 eingeordnet wurden.

Im dreidimensionalen Fall wird ein Lot 12 von jedem zweiten Raumelement 10b auf die "Voxelebene" gefällt, die aus ersten Raumelementen 10a besteht, und sämtliche Raumelemente zwischen dem zweiten Raumelement 10b und dem ersten getroffenen Raumelement 10a werden dann mit der drei dimensionalen Bildinformation des getroffenen ersten Raumelements 10a ausgefüllt bzw. definiert. Der Vorteil dieses Verfahrens liegt in seiner Einfachheit und der daraus resultierenden Geschwindigkeit. Außerdem liefert es sehr scharfe Ergebnisse, da die zu füllenden Voxel nicht mittels Interpolation bestimmt werden, vorausgesetzt die aufgenommenen Schichten liegen relativ nahe beieinander. Empirische Untersuchungen haben mittlere Bildabstände von 1 bis etwa 10, mit Vorteil etwa 2 bis 3 Voxeln ergeben.

Eine andere vorteilhafte Ausführungsform des erfindungsgemäßen Verfahrens nach Figur 5 "füllt" jedes zwischen den einzelnen Voxelebenen liegende zweite Raumelement 10b mittels linearer Interpolation, d.h. beispielsweise mittels Gewichten aus den Abständen des jeweiligen zweiten Raumelements 10b von der entsprechenden Voxelebene. Danach werden die einzelnen zweiten Raumelemente 10b nicht mehr mit anderen "Strahlen" interpoliert, die möglicherweise die bereits definierten zweiten Raumelemente 10b "schneiden".

Eine weitere vorteilhafte Ausführungsform des erfindungsgemäßen Verfahrens nach Figur 5 "füllt" jedes zwischen den einzelnen Voxelebenen liegende zweite Raumelement 10b mittels der Information des ersten Raumelements 10a, das den Startpunkt des Suchstrahls bildet. Danach werden zweite Kreuzelemente 20 mit weiteren "Strahlen" interpoliert, die die bereits definierten zweiten Kreuzelemente 20 "schneiden".

Der Vorteil dieser Verfahren liegt wiederum in der Einfachheit und der daraus resultierenden Geschwindigkeit. Es eignet sich besonders gut für parallele und geschwenkte Bewegungen, vor allem dann, wenn die Schichten relativ weit auseinander liegen.

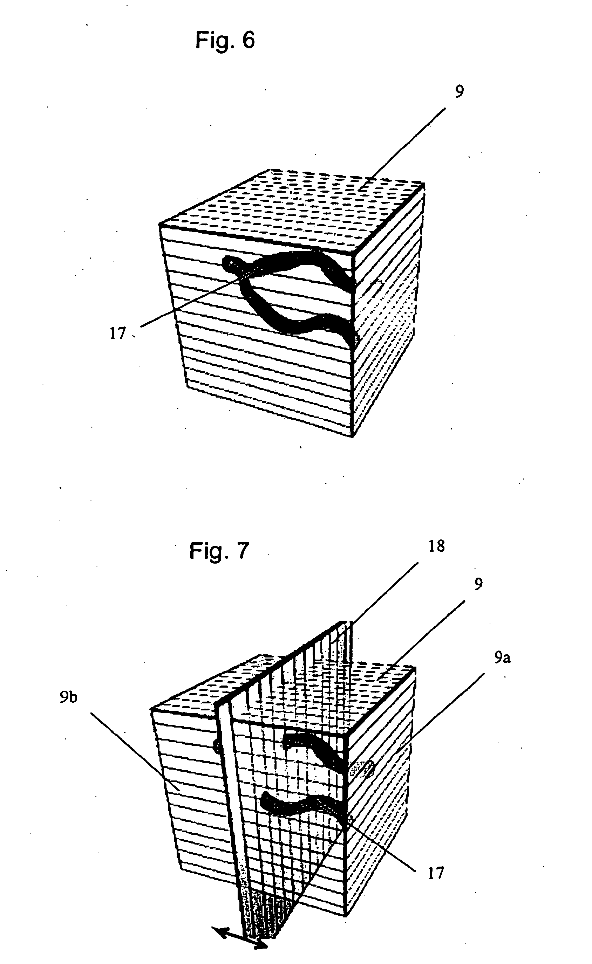

Zur Darstellung der rekonstruierten mehrdimensionalen Objekte 1 eignet sich das vorliegende Verfahren insb. für den durch die erste und zweite Raumelementgruppe 15a und 15b definierten Voxelraum 9. Diese Darstellungsmöglichkeiten werden in den Figuren 6, 7 und 8 gezeigt.

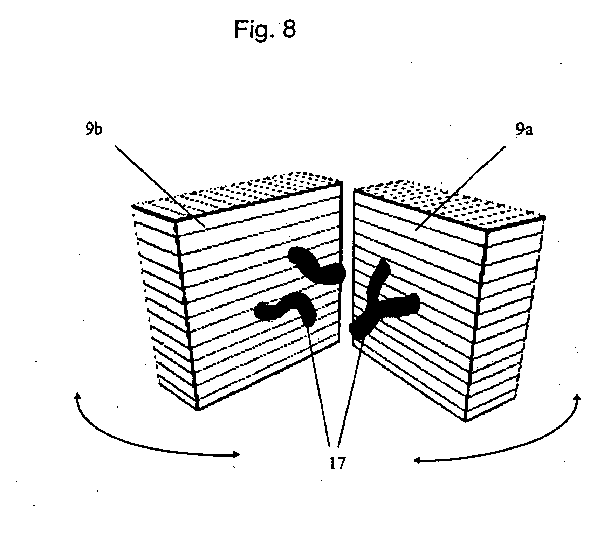

Insbesondere zeigt Figur 6 den mehrdimensionalen Voxelraum 9, der durch die erste Raumelementgruppe 15a und zweite Raumelementgruppe 15b aufgespannt wurde und in dem sich ein rekonstruiertes Objekt 17 befindet. Wie in Figur 7 dargestellt, kann eine Schnittebene 18 durch das rekonstruierte Objekt 17 beliebig gelegt werden, wobei sich die Schnittebene ebenfalls in jeder beliebigen Richtung verschieben oder drehen läßt. Die Schnittebene 18 teilt den mehrdimensionalen Voxelraum 9 in einen rechten Teil-Voxelraum 9a und einen linken Teil-Voxelraum 9b. In Figur 8 ist der rechte Teil-Voxelraum 9a in der Schnittdarstellung derart dargestellt, daß das rekonstruierte Objekt 17 aus dem linken Teil-Voxelraum 9b mehrdimensional dargestellt zu sehen ist. Gleichermaßen ist der linke Teil-Voxelraum 9b mit jenem Teil des rekonstruierten Objekts 17 dargestellt, der sich ursprünglich im rechten Teil-Voxelraum 9a befand. Durch Verschiebung der Schnittebene 18 können so Teilansichten des Objekts getrennt dargestellt werden, wobei stets das Gesamtobjekt sichtbar ist. Auch können die einzelnen Teilräume beliebig geschwenkt und verschoben werden, um Teilansichten des Objekts sichtbar zu machen.

Dieses Verfahren eignet sich insbesondere zur Darstellung von farbigen rekonstruierten Volumina. Dabei hat das vorliegende Darstellungsverfahren mittels des mehrdimensionalen Voxelraums 9 den Vorteil, daß sämtliche Raumelemente oder nahezu sämtliche Raumelemente 10a, 10b im mehrdimensionalen Voxelraum 9 bekannt sind und sich somit beliebige Schnittdarstellungen mehrdimensional darstellen lassen, ohne daß bestimmte Teile des rekonstruierten Objekts 17 "abgeschnitten" werden. So lassen sich bestimmte Farbanteile der Rekonstruktion "herausschälen", während andere Anteile im verborgenen bleiben. Beide Volumenteile lassen sich mit Vorteil animieren, transparent darstellen oder vierdimensional, d.h. in der natürlichen Bewegung rekonstruiert, darstellen.

## Patentansprüche

1. Verfahren zur Rekonstruktion eines mehrdimensionalen Objekts (1) aus ein- oder zweidimensionalen Bilddaten (13), insbesondere aus Ultraschallbilddaten, anhand von Aufnahmen (7) ein- oder zweidimensionaler Bild-Teilbereiche (6) des Objekts (1), wobei die absoluten räumlichen und/oder zeitlichen Positionen der einzelnen Bild-Teilbereiche (6) im Raum und/oder die relativen räumlichen und/oder zeitlichen Positionen der einzelnen Bild-Teilbereiche (6) zueinander zusammen mit den ein- oder zweidimensionalen Bilddaten (13) der einzelnen Bild-Teilbereiche (6) zur Generierung mehrdimensionaler Bilddaten verwendet werden, indem eine erste Raumelementgruppe (15a) aus ersten, Bildinformationen enthaltenden Raumelementen (10a), die Ebenen oder Linien der Bild-Teilbereiche (6) berühren oder schneiden, in einem mehrdimensionalen Voxelraum (9) mittels der ein- oder zweidimensionalen Bilddaten erzeugt wird,
eine zweite Raumelementgruppe (15b) aus zweiten Raumelementen (10b) in dem mehrdimensionalen Voxelraum (9) aus den Bildinformationen der ersten Raumelementgruppe (15a) erzeugt wird, und
die erste Raumelementgruppe (15a) und die zweite Raumelementgruppe (15b) den mehrdimensionalen Voxelraum (9) bilden,
wobei
ein von jedem ersten Raumelement (10a) abgehender und längs eines vorbestimmbaren mehrdimensionalen Richtungsvektors (Φ) liegender Suchstrahl (14) diejenigen zweiten Raumelemente (10b) definiert, die mittels der Bildinformationen desjenigen ersten Raumelements (10a) bestimmt werden, das den Startpunkt (16) des Suchstrahls (14) bildet,
der Suchstrahl (14) längs des vorbestimmbaren mehrdimensionalen Richtungsvektors (Φ) eine maximale räumliche und/oder zeitliche Länge (11) hat,
die zweiten Raumelemente (10b) in einem ersten Schritt mittels der Bildinformationen desjenigen ersten Raumelements (10a) bestimmt werden, das den Startpunkt (16) des Suchstrahls (14) bildet, und
die zweiten Raumelemente (10b) in weiteren Schritten mittels Bildinformationen weiterer erster Raumelemente (10a) gewichtet werden, die Startpunkte (16) von Suchstrahlen (14) bilden, die die zweiten Raumelemente (10b) ebenfalls durchdringen, wobei sich die Gewichte an den mehrdimensionalen Entfernungen jedes zweiten Raumelements (10b) zu den entsprechenden Startpunkten (16, 19) orientieren.

2. Verfahren nach Anspruch 1,
**dadurch gekennzeichnet, daß**
die Bildinformation jedes ersten Raumelements (10a) mittels derjenigen ein- oder zweidimensionalen Bilddaten (13) bestimmt wird, die an der jeweiligen Schnitt-/Berührungsstelle des entsprechenden ersten Raumelements (10a) mit der entsprechenden Ebene oder Linie eines Bild-Teilbereichs (6) existiert.

3. Verfahren nach einem der vorhergehenden Ansprüche,
**dadurch gekennzeichnet, daß**
das Objekt (1) mittels des mehrdimensionalen Voxelraums (9) rekonstruiert mehrdimensional dargestellt wird und/oder Teile des rekonstruierten Objekts (17) mittels variabler Schnittebenen (18) dargestellt werden.

4. Verfahren nach Anspruch 3,
**dadurch gekennzeichnet, daß**
das rekonstruierte Objekt (17) oder Teile davon mit vorbestimmbaren Charakteristika wie Farbe oder Widerstand dargestellt bzw. ausgestattet werden.

5. Verfahren nach einem der Ansprüche 3 oder 4,
**dadurch gekennzeichnet, daß**
bestimmte Teile des mehrdimensionalen Voxelraums (9) auf einer Seite einer Schnittebene (18) zur Sichtbarmachung von Teilen des rekonstruierten Objekts (17) markiert und zur Darstellung zerlegt werden.

6. Verfahren nach einem der Ansprüche 3 - 5,
**dadurch gekennzeichnet, daß**
der mehrdimensionale Voxelraum (9) zur Sichtbarmachung bestimmter Teile des rekonstruierten Objekts (17) mittels einer Schnittebene (18) in mindestens zwei Hälften (9a, 9b) zerlegt wird, und
die Schnittebene und/oder die mindestens zwei Hälften (9a, 9b) in verschiedene mehrdimensionale Richtungen dreh-, rotier-, und/oder verschiebbar ist.

7. Vorrichtung zur Rekonstruktion eines mehrdimensionalen Objekts (1) aus ein- oder zweidimensionalen Bilddaten (13), insbesondere aus Ultraschallbilddaten, anhand von Aufnahmen (7) ein- oder zweidimensionaler Bild-Teilbereiche (6) des Objekts (1), wobei erste Speichermittel die absoluten räumlichen und/oder zeitlichen Positionen der einzelnen Bild-Teilbereiche (6) und/oder die relativen räumlichen und/oder zeitlichen Positionen der einzelnen Bild-Teilbereiche (6) zueinander zusammen mit den ein- oder zweidimensionalen Bilddaten (13) der einzelnen Bild-Teilbereiche (6) zur Generierung mehrdimensionaler Bilddaten speichern,
zweite Speichermittel eine erste Raumelementgruppe (15a) speichern, die aus ersten, Bildinformationen enthaltenden Raumelementen (10a), die Ebenen oder Linien der Bild-Teilbereiche (6) berühren oder.schneiden, in einem mehrdimensionalen Voxelraum (9) mittels der ein- oder zweidimensionalen Bilddaten erzeugt wurde, und
dritte Speichermittel eine zweite Raumelementgruppe (15b) speichern, die aus zweiten Raumelementen (10b) in dem mehrdimensionalen Voxelraum (9) aus den Bildinformationen der ersten Raumelementgruppe (15a) erzeugt wurde,
wobei die Vorrichtung zur Durchführung eines Verfahrens nach einem der vorhergehenden Ansprüche konfiguriert ist.

8. Verwendung eines Verfahrens nach einem der Ansprüche 1 bis 6 oder einer Vorrichtung nach Anspruch 7, zur mehrdimensionalen Rekonstruktion und Darstellung eines Organs, insbesondere des Herzens eines Lebewesens, unter Berücksichtigung der Bewegung des Herzens.

9. Verwendung eines Verfahrens nach einem der Ansprüche 1 bis 6 oder einer Vorrichtung nach Anspruch 7, zur transthorakalen (TTE), transösophagealen (TEE) oder intravaskulären (IVUS) Echokardiographie oder intraductalen (IDUS) Sonographie.

## Claims

1. Method of reconstructing a multidimensional object (1) from one- or two-dimensional image data (13), in particular from ultrasound image data, by means of records (7) of one- or two-dimensional image partial areas (6) of the object (1),
wherein the absolute spatial and/or temporal positions of the individual image partial areas (6) in space and/or the relative spatial and/or temporal positions of the individual image partial areas (6) relative to one another together with the one- or two-dimensional image data (13) of the individual image partial areas (6) are used to generate multidimensional image data, whereby a first spatial element group (15a) composed of first spatial elements (10a) containing image information and touching or intersecting with the planes or lines of the image partial areas (6) is generated in a multidimensional voxel space (9) by means of the one- or two-dimensional image data,
a second spatial element group (15b) composed of second spatial elements (10b) is generated in the multidimensional voxel space (9) from the image information of the first spatial element group (15a), and
the first spatial element group (15a) and the second spatial element group (15b) form the multidimensional voxel space (9),
wherein
a search beam (14) starts from each first space element (10a) and runs along a pre-determinable multidimensional direction vector (Φ) and defines those second spatial elements (10b) which are determined by means of the image information of that first space element (10a) which forms the starting point (16) of the search beam (14),
the search beam (14) has a maximum spatial and/or temporal length (11) along the pre-determinable multidimensional direction vector (Φ),
the second spatial elements (10b) are determined in a first step by means of the image information of that first space element (10a), which forms the starting point (19) of the search beam (14), and
the second spatial elements (10b) are weighted in further steps by means of the image information of further first spatial elements (10a), which form starting points (16) of search beams (14), which also penetrate the second space elements (10b),
wherein the weights orientate themselves at the multidimensional distances of each second space element (10b) to the respective starting points (16, 19).

2. Method according to claim 1,
**characterised in that**
the image information of each first spatial element (10a) is determined by means of the one- or two-dimensional image data (13) which exists on the respective point of intersection/contact of the corresponding first spatial element (10a) with the corresponding plane or line of an image partial area (6).

3. Method according to one of the preceding claims,
**characterised in that**
the object (1) is displayed reconstructed multidimensionally by means of the multidimensional voxel space (9) and/or **in that** parts of the reconstructed object (17) are represented by means of variable section planes (18).

4. Method according to claim 3,
**characterised in that**
the reconstructed object (17) or parts thereof are displayed or equipped with pre-determinable characteristics such as colour or resistance.

5. Method according to either of claims 3 or 4,
**characterised in that**
certain parts of the multidimensional voxel space (9) are marked on one side of a section plane (18) in order to show parts of the reconstructed object (17) and are dissected for representation.

6. Method according to one of claims 3-5,
**characterised in that**
the multidimensional voxel space (9) is dissected into at least two halves (9a, 9b) in order to show certain parts of the reconstructed object (17) by means of a section plane (18), and
**in that** the section plane and/or the at least two halves (9a, 9b) may be turned/rotated and/or displaced in various multidimensional directions.

7. Device for reconstructing a multidimensional object (1) from one- or two-dimensional image data (13), in particular from ultrasound image data, by means of records (7) of one- or two-dimensional image partial regions (6) of the object (1),
wherein
first storage means store the absolute spatial and/or temporal positions of the individual image partial areas (6) and/or the relative spatial and/or temporal positions of the individual image partial regions (6) relative to one another together with the one- or two-dimensional image data (13) of the individual image partial regions (6) in order to generate multidimensional image data,
second storage means store a first spatial element group (15a), which has been generated in a multidimensional voxel space (9) by means of the one- or two-dimensional image data from spatial elements (10a) containing first image information and which touch or intersect with planes or lines of the image partial areas (6), and
third storage means store a second spatial element group (15b), which has been generated from second spatial elements (10b) in the multidimensional voxel space (9) from the image information of the first spatial element group (15a),
wherein the device is configured for carrying out a method according to one of the preceding claims.

8. Use of a method according to one of claims 1 to 6 or a device according to claim 7, for the multidimensional reconstruction and representation of an organ, in particular the heart of a living being, taking into account the movement of the heart.

9. Use of a method according to one of claims 1 to 6 or of a device according to claim 7, for transthoracic echocardiography (TTE), transoesophagal echocardiography (TEE) or intravascular (IVUS) or intraductal (IDUS) ultrasonography.

## Revendications

1. Procédé pour la reconstruction d'un objet (1) multidimensionnel à partir de données d'image uni- ou bidimensionnelles, en particulier à partir de données d'image ultrasonores, à l'aide d'enregistrements (7) de zones d'images partielles uni- ou bidimensionnelles (6) de l'objet (1), dans lequel les positions spatiales et/ou temporelles absolues des zones d'images partielles (6) dans l'espace et/ou les positions spatiales et/ou temporelles relatives des zones partielles d'images individuelles (6) entre elles sont utilisées conjointement avec les données d'image uni- ou bidimensionnelles (13) des zones d'images partielles individuelles (6) pour générer des données d'image multidimensionnelles,
en générant un premier groupe d'éléments spatiaux (15a) composé de premiers éléments spatiaux (10a) contenant des informations d'image, qui touchent ou qui recoupent des plans ou des lignes des zones d'images partielles (6), dans un espace de voxels multidimensionnel (9) au moyen des données d'image uni- ou bidimensionnelles,
en générant un deuxième groupe d'éléments spatiaux (15b) composé de deuxièmes éléments spatiaux (10b) dans l'espace de voxels (9) multidimensionnel, à partir des informations d'image du premier groupe d'éléments spatiaux (15a), et
le premier groupe d'éléments spatiaux (15a) et le deuxième groupe d'éléments spatiaux (15b) forment l'espace de voxels multidimensionnel (9),
un rayon de recherche (14) partant depuis chaque premier élément spatial (10a) et disposé le long d'un vecteur directeur (Φ) prédéterminable multidimensionnel définit ceux des deuxièmes éléments spatiaux (10b) qui sont déterminés au moyen des informations d'image de celui des premiers éléments spatiaux (10a) qui forme le point de départ (16) du rayon de recherche (14),
le rayon de recherche (14) présente une longueur maximale dans l'espace et/ou dans le temps (11) le long du vecteur directeur (Φ) prédéterminable multidimensionnel,
en une première étape, on détermine les deuxièmes éléments spatiaux (10b) au moyen des informations d'image de celui des premiers éléments spatiaux (10a) qui forme le point de départ (16) du rayon de recherche (14), et
en d'autres étapes, on pondère les deuxièmes éléments spatiaux (10b) au moyen d'information d'image d'autres premiers éléments spatiaux (10a) qui forment des points de départ (16) de rayons de recherche (14) qui traversent également les deuxièmes éléments spatiaux (10b), et les pondérations sont orientées vis-à-vis des éloignements en plusieurs dimensions de chaque deuxième élément spatial (10b) jusqu'au point de départ correspondant (16, 19).

2. Procédé selon la revendication 1,
**caractérisé en ce que** l'information d'image de chaque premier élément spatial (10a) est déterminée au moyen de celles des données d'image uni- ou bidimensionnelles (16) qui existent au niveau de l'emplacement d'intersection/contact respectif du premier élément spatial correspondant (10a) avec le plan ou la ligne correspondant(e) d'une zone d'image partielle (6).

3. Procédé selon l'une des revendications précédentes,
**caractérisé en ce que** l'objet (1) est reconstruit et représenté en plusieurs dimensions au moyen de l'espace de voxels multidimensionnel (9) et/ou **en ce que** des parties de l'objet reconstruit (17) sont représentées au moyen de plans de coupe variables (18).

4. Procédé selon la revendication 3,
**caractérisé en ce que** l'objet reconstruit (17) ou des parties de celui-ci sont représentés avec et/ou pourvus de caractéristiques prédéterminables telles que couleur ou résistance.

5. Procédé selon l'une des revendications 3 ou 4,
**caractérisé en ce que** certaines parties de l'espace de voxels multidimensionnel (9) sont marquées d'un côté d'un plan de coupe (18) pour visualiser certaines parties de l'objet reconstruit (17) et divisées pour la représentation.

6. Procédé selon l'une des revendications 3 à 5,
**caractérisé en ce que** l'espace de voxels multidimensionnel (9) est divisé en au moins deux moitiés (9a, 9b) au moyen d'un plan de coupe (18) pour visualiser certaines parties de l'objet reconstruit (17), et
le plan de coupe et/ou lesdites au moins deux moitiés (9a, 9b) peuvent être tournés et/ou déplacés dans différentes directions multidimensionnelles.

7. Dispositif pour la reconstruction d'objets multidimensionnels (1) à partir de données d'image uni- ou bidimensionnelles (13), en particulier à partir de données d'image ultrasonores, à l'aide d'enregistrements (7) de zones d'images partielles uni- ou bidimensionnelles (6) de l'objet (1),
dans lequel des premiers moyens de mémorisation mémorisent les positions spatiales et/ou temporelles absolues des zones d'images partielles individuelles (6) et/ou les positions spatiales et/ou temporelles relatives des zones d'images partielles individuelles (6) entre elles, conjointement avec les données d'image uni- ou bidimensionnelles (13) des zones d'images partielles individuelles (6) pour générer des données d'image multidimensionnelles,
des deuxièmes moyens de mémorisation mémorisent un premier groupe d'éléments spatiaux (15a) qui a été généré dans un espace de voxels multidimensionnel (9) à partir de premiers éléments spatiaux (10a) contenant des informations d'image, qui touchent ou qui recoupent des plans ou des lignes des zones d'images partielles (6), au moyen des données d'image uni- ou bidimensionnelles, et
des troisièmes moyens de mémorisation mémorisent un deuxième groupe d'éléments spatiaux (15b) qui a été généré dans l'espace multidimensionnel des voxels (9) à partir de deuxièmes éléments spatiaux (10b), à partir des informations d'image du premier groupe d'éléments spatiaux (15a),
et le dispositif est configuré pour exécuter un procédé selon l'une des revendications précédentes.

8. Utilisation d'un procédé selon l'une des revendications 1 à 6, ou d'un dispositif selon la revendication 7, pour la reconstruction et la représentation multidimensionnelle d'un organe, en particulier du coeur d'un être vivant, en tenant compte du mouvement du coeur.

9. Utilisation d'un procédé selon l'une des revendications 1 à 6, ou d'un dispositif selon la revendication 7, pour l'écho-cardiographie transthoracique (TTE), transoesophagienne (TEE) ou intra-vasculaire (IVUS) ou pour la sonographie intracanalaire (IDUS).
